# EUROPÄISCHE PATENTSCHRIFT

(11) **EP 3 142 825 B1**
(45) Veröffentlichungstag und Bekanntmachung des Hinweises auf die Patenterteilung: **10.07.2019**
(21) Anmeldenummer: 15736781.4
(22) Anmeldetag: 13.05.2015
(51) Int. Cl.: B23P 15/10, B23K 26/24, B23K 35/02, F02F 3/20, B23K 26/28, F02F 3/00

(54) **VERFAHREN ZUR HERSTELLUNG EINES KOLBENS FÜR EINEN VERBRENNUNGSMOTOR SOWIE MITTELS DES VERFAHRENS HERGESTELLTER KOLBEN**
METHOD FOR PRODUCING A PISTON FOR AN INTERNAL COMBUSTION ENGINE AND PISTON PRODUCED BY MEANS OF SAID METHOD
PROCÉDÉ DE FABRICATION D'UN PISTON POUR UN MOTEUR À COMBUSTION INTERNE ET PISTON FABRIQUÉ AU MOYEN DU PROCÉDÉ

(30) Priorität: 16.05.2014 DE 102014007127
(43) Veröffentlichungstag der Anmeldung: 22.03.2017
(73) Patentinhaber: Mahle International GmbH, 70376 Stuttgart (DE)
(72) Erfinder: BING, Karlheinz, 71686 Remseck (DE); MOCK, Daniel, 71254 Ditzingen (DE); PETROWITSCH, Mathias, 70839 Gerlingen (DE)
(74) Vertreter: BRP Renaud & Partner mbB Rechtsanwälte Patentanwälte Steuerberater
(86) Internationale Anmeldenummer: PCT/EP2015/000980
(87) Internationale Veröffentlichungsnummer: WO 2015/172880

(56) Entgegenhaltungen:
- WO-A2-2004/004958
- DE-A1-102012 003 720
- US-A- 5 211 327
- US-A1- 2013 068 096

## Beschreibung

Die vorliegende Erfindung betrifft ein Verfahren zur Herstellung eines Kolbens für einen Verbrennungsmotor mit mindestens zwei Kolbenbauteilen, wobei mindestens zwei Kolbenbauteile entlang ihrer korrespondierenden Fügeflächen über mindestens eine radial oder axial umlaufende Laserschweißnaht miteinander verbunden werden, gemäß dem Oberbegriff des Anspruchs 1, wie z.B. aus US 2013/0068096 A1 bekannt.

Aus der US 2013/068096 A1 ist ein gattungsgemäßes Verfahren zur Herstellung eines Kolbens für einen Verbrennungsmotor mit mindestens zwei Kolbenbauteilen bekannt, wobei mindestens zwei Kolbenbauteile entlang ihrer korrespondierenden Fügeflächen über mindestens eine radial oder axial umlaufende Laserschweißnaht miteinander verbunden werden.

Aus der DE 10 2012 003 720 A1ist ein Laser-Überlappschweißverfahren mit folgenden Verfahrensschritten bekannt: Durchführen des Überlappschweißens durch Einstrahlen eines Laserstrahls auf eine Mehrzahl von überlappenden Werkstücken und - nach einer äußerst kurzen Unterbrechungszeitspanne des Einstrahlens des Laserstrahls - Einstrahlen eines defokussierten Laserstrahls auf ein auslaufendes Überlappschweißende.

Aus der WO 2004/004958 A2 ist ein Verfahren für fehlerfreies Laserschweißen im Start/Stopp-Bereich bekannt.

Aus der US 5,211,327 A ist ein weiteres Verfahren zum Laserschweißen bekannt.

Kolbenbauteile werden immer häufiger mittels eines Laserschweißverfahrens gefügt, so dass diese Technik zunehmend an Bedeutung gewinnt. Bei axial oder radial umlaufenden Laserschweißnähten stellt sich das Problem, dass in dem Bereich, in dem sich der Anfang und das Ende der umlaufenden Laserschweißnaht überlappen, die Laserschweißnaht nicht durchgeschweißt ist, sondern eine reduzierte Schweißnahttiefe aufweist. Dies liegt darin begründet, dass die Leistungsdichte bzw. die Streckenenergie zu Beginn des Laserschweißvorgangs zunächst kontinuierlich gesteigert werden muss (sog. Auframpen) und gegen Ende des Laserschweißvorgangs kontinuierlich reduziert werden muss (sog. Abrampen). Während des Auframpens und des Abrampens findet aufgrund der dann zu geringen Leistungsdichte bzw. Streckenenergie kein Durchschweißen der Laserschweißnaht statt. Dies hat zur Folge, dass beim Abkühlen der Laserschweißnaht in ihrem nicht durchgeschweißten Bereich Gefügedefekte, bspw. Risse, auftreten können.

Die Aufgabe der vorliegenden Erfindung besteht darin, ein gattungsgemäßes Verfahren zur Herstellung eines Kolbens so weiterzuentwickeln, dass der Bildung von Gefügedefekten im nicht durchgeschweißten Bereich der Laserschweißnaht wirksam entgegengewirkt wird bzw. bereits entstandene Gefügedefekte behoben werden.

Die Lösung besteht in einem Verfahren mit den folgenden Schritten: a) Ausrichten der mindestens zwei Kolbenbauteile entlang ihrer korrespondierenden Fügeflächen, b) Aktivieren eines für ein Tiefschweißverfahren eingerichteten Lasers und Ausrichten des vom Laser erzeugten Laserstrahls an einen definierten Startpunkt im Bereich der Fügeflächen, c) Steigern der Leistungsdichte (Auframpen) des Laserstrahls ausgehend vom definierten Startpunkt (SP) über eine definierte Strecke (S1) entlang der korrespondierenden Fügeflächen unter Erzeugung einer Auframpschweißnaht mit zunehmender Schweißnahttiefe, d) umlaufendes, vollständiges Durchschweißen entlang der korrespondierenden Fügeflächen mittels Tiefschweißen unter Erzeugung einer Tiefschweißnaht mit im Wesentlichen konstanter Schweißnahttiefe zumindest bis zu einem definierten Endpunkt (EP), e) Reduzieren der Leistungsdichte (Abrampen) des Laserstrahls über eine definierte Strecke (S2) unter Erzeugung einer Abrampschweißnaht mit abnehmender Schweißnahttiefe, f) Überschweißen zumindest eines Teils der definierten Strecken (S1, S2) mittels Wärmeleitungsschweißen unter Verwendung eines für ein Wärmeleitungsschweißverfahren eingerichteten Lasers unter Erzeugung mindestens einer Wärmeleitungsschweißnaht.

Gegenstand der vorliegenden Erfindung ist ferner ein Kolben für einen Verbrennungsmotor, der gemäß dem erfindungsgemäßen Verfahren herstellbar ist und somit im Ergebnis eine Laserschweißnaht aufweist, die aus einer Tiefschweißnaht und einer Wärmeleitungsschweißnaht zusammengesetzt ist.

Im Rahmen der Offenbarung der vorliegenden Patentanmeldung werden die Begriffe "Wärmeleitungsschweißen" und "Tiefschweißen" wie folgt verstanden:
Beim Wärmeleitungsschweißen schmelzen die Werkstoffe der zu verbindenden Bauteile im Bereich der Fügeflächen ausschließlich durch Wärmeleitung, d.h. durch Absorption der Energie des Laserstrahls ausschließlich im Bereich der Bauteiloberflächen. Der aufgeschmolzene Werkstoff beider Bauteile verbindet nach seinem Erstarren die Bauteile miteinander. Die Nahtbreite ist in der Regel größer als die Nahttiefe. Die hierfür benötigte Energiedichte des Laserstrahls beträgt typischerweise 1 × 10⁴ W/cm² bis 1 × 10⁵ W/cm².

Beim Tiefschweißen wird der Werkstoff der Bauteile entlang der Fügeflächen so stark erwärmt, dass die Temperatur in diesem Bereich die Verdampfungstemperatur der Werkstoffe überschreitet. Dadurch wird entlang der Fügeflächen eine von geschmolzenem Werkstoff umgebene Dampfkapillare erzeugt, die sich mit dem Laserstrahl bewegt. Der auf der Rückseite der Dampfkapillare erstarrende Werkstoff erzeugt eine schmale Tiefschweißnaht, deren Schweißnahttiefe wesentlich größer ist als die Schweißnahtbreite. Die hierfür benötigte Energiedichte des Laserstrahls beträgt in der Regel mehr als 1 × 10⁶ W/cm².

Die dem erfindungsgemäßen Verfahren zugrunde liegende erfinderische Idee besteht darin, dass ein Tiefschweißverfahren und ein Wärmeleitungsschweißverfahren miteinander kombiniert werden, derart, dass im Bereich der definierten Strecken (S1, S2) auftretende Gefügedefekte durch ein lokal begrenztes Wärmeleitschweißverfahren vermieden werden und/oder durch das erneute Aufschmelzen des Werkstoffs behoben werden. Dadurch wird auch eine Vergrößerung bereits vorhandener Gefügedefekte, ausgehend von den während der Abkühlung der Laserschweißnaht entstehenden Gefügedefekten, vermieden. Dieser Effekt beruht auf der größeren Schweißnahtbreite der Wärmeleitungsschweißnaht und somit auf einer reduzierten thermischen Spannung sowie einer gleichmäßigeren Gefügeausbildung während des Erstarrens des Werkstoffs. Insbesondere können bei der Fertigbearbeitung der Oberfläche des Kolbens im Bereich der Laserschweißnaht keine Gefügedefekte in Form von nach außen geöffneter Risse mehr entstehen.

Ein weiterer Vorteil des erfindungsgemäßen Verfahrens besteht darin, dass es besonders einfach in einen bestehenden Prozessablauf zur Herstellung des Kolbens integriert werden kann. Vor dem Laserschweißprozess bestehende Prozessstationen wie Vorbearbeitung, Ausrichten, ggf. Vorerwärmen der zu fügenden Bauteile bzw. nach dem Laserschweißprozess bestehende Prozessstationen wie Wärmenachbehandlung und Fertigbearbeitung können unverändert beibehalten werden.

Vorteilhafte Weiterbildungen ergeben sich aus den Unteransprüchen.

Vorzugsweise wird in Schritt c) die Länge der definierten Strecke, abhängig von den Abmessungen des Kolbens, auf 5 mm bis 15 mm eingestellt. In vergleichbarer Weise wird in Schritt e) die Länge der definierten Strecke vorzugsweise auf 5 mm bis 25 mm eingestellt.

In Schritt d) wird die Schweißnahttiefe der Tiefschweißnaht vorzugsweise auf 2 mm bis 12 mm eingestellt. Besonders bevorzugt wird die Tiefschweißnaht vollständig durchgeschweißt.

Eine besonders bevorzugte Ausbildung des erfindungsgemäßen Verfahrens sieht vor, dass der zeitliche Abstand zwischen Schritt e) und Schritt f) maximal 10 Sekunden beträgt, um eine Ausbildung von Gefügedefekten während der Abkühlung besonders wirksam zu unterdrücken. Zur Verkürzung des zeitlichen Abstands können insbesondere in Schritt e) und in Schritt f) zwei separate Laser verwendet werden, wobei in Schritt f) vor der Beendigung von Schritt e) unter Verwendung eines separaten Lasers mit dem Wärmeleitungsschweißprozess begonnen wird.

Vorzugsweise wird in Schritt f) die definierte Strecke (S2) vollständig überschweißt, um eine weitergehende Ausbildung von Gefügedefekten besonders effektiv zu unterbinden. Gegebenenfalls kann auch die Laserschweißnaht teilweise oder vollständig überschweißt werden.

Die mindestens eine Wärmeleitungsschweißnaht ist bevorzugt längs zur Tiefschweißnaht orientiert, um eine möglichst einheitliche Gefügeausbildung während des Erstarrens des aufgeschmolzenen Werkstoffs zu erzielen. Es kann aber auch ein Schweißen quer und/oder parallel zur Tiefschweißnaht erfolgen, bspw. in Form von wellen- oder zickzackförmigen Schweißnähten. Die Schweißnahttiefe der Wärmeleitungsschweißnaht beträgt bevorzugt zwischen 1 mm und 3 mm.

Das erfindungsgemäße Verfahren ist besonders zum Fügen eines ersten Kolbenbauteils in Form eines Kolbengrundkörpers und eines zweiten Kolbenbauteils in Form eines ringförmigen Bauteils, bspw. eines Muldenrandelements oder eines Ringnutenelements, geeignet.

Ein Ausführungsbeispiel der Erfindung wird im Folgenden anhand der beigefügten Zeichnungen näher erläutert. Es zeigen in einer schematischen, nicht maßstabsgetreuen Darstellung:
- Figur 1: ein erstes Ausführungsbeispiel eines gemäß dem erfindungsgemäßen Verfahrens hergestellten Kolbens im Schnitt;
- Figur 2: die Kolbenbauteile des Kolbens gemäß Figur 1 vor Durchführung des erfindungsgemäßen Verfahrens im Schnitt;
- Figur 3: eine Draufsicht auf den Kolben gemäß Figur 1;
- Figur 4: ein weiteres Ausführungsbeispiel eines erfindungsgemäßen Kolbens im Schnitt;
- Figur 5: eine schematische Darstellung eines Ausführungsbeispiels des erfindungsgemäßen Verfahrens.

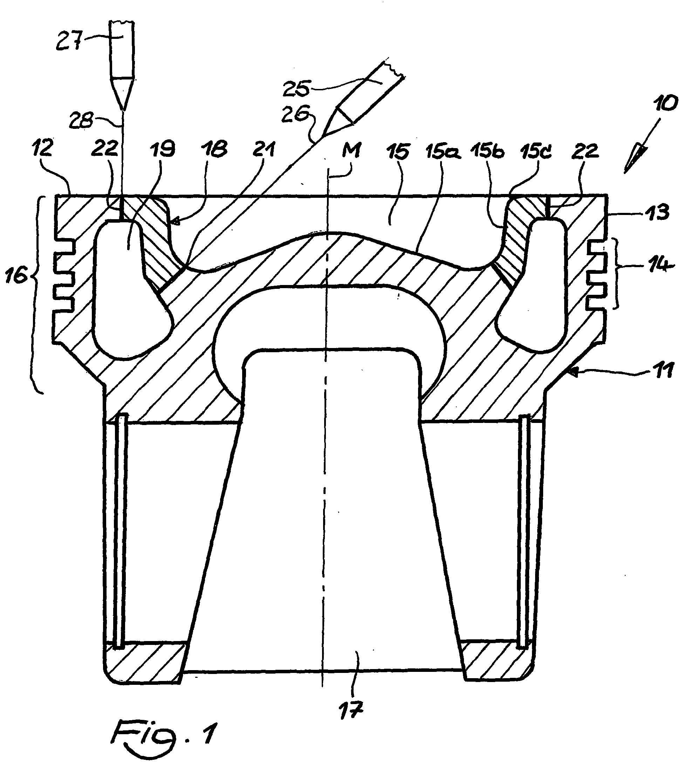

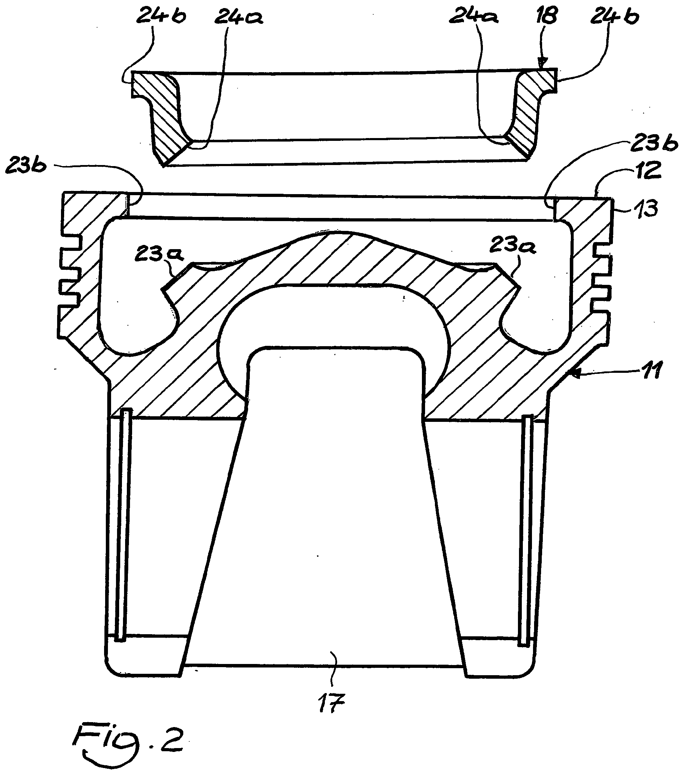

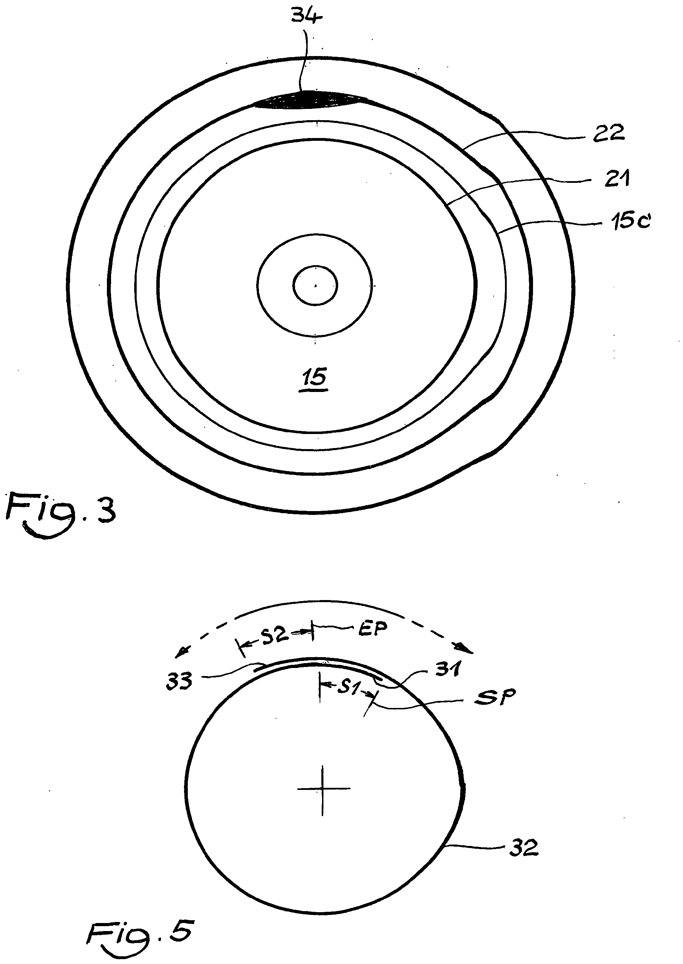

Die Figuren 1 bis 3 zeigen ein erstes Ausführungsbeispiel eines Kolbens 10, sowohl mit seinen im Ausführungsbeispiel zwei einzelnen Kolbenbauteilen 11, 18 vor dem Verbinden mit dem erfindungsgemäßen Verfahren (Figur 2) als auch nach dem Verbinden der Kolbenbauteile 11, 18 (Figuren 1 und 3). Der Kolben 10 weist im Ausführungsbeispiel ein als Kolbengrundkörper ausgebildetes erstes Kolbenbauteil 11 auf, das bspw. aus einem Vergütungsstahl wie bspw. 42CrMo4 oder einem AFP-Stahl wie bspw. 38MnVS6 hergestellt ist. Das erste Kolbenbauteil 11 weist einen äußeren Teil eines Kolbenbodens 12, einen umlaufenden Feuersteg 13 sowie eine umlaufende Ringpartie 14 mit Ringnuten zur Aufnahme von Kolbenringen (nicht dargestellt) auf. Das erste Kolbenbauteil 11 weist ferner den Boden 15a einer Verbrennungsmulde 15 auf. Das erste Kolbenbauteil 11 bildet somit einen wesentlichen Teil des Kolbenkopfes 16 des Kolbens 10. Das erste Kolbenbauteil 11 bildet ferner in an sich bekannter Weise den Kolbenschaft 17 des Kolbens 10.

Der Kolben 10 weist ferner ein als Muldenrandelement ausgebildetes, ringförmiges zweites Kolbenbauteil 18 auf. Das zweite Kolbenbauteil 18 umfasst im Ausführungsbeispiel die gesamte Muldenwand 15b sowie den Muldenrandbereich 15c der Verbrennungsmulde 15 und ferner einen inneren Teil des Kolbenbodens 12. Das zweite Kolbenbauteil 18 besteht vorzugsweise aus einem besonders widerstandsfähigen Werkstoff. Hierfür kann wie für den Kolbengrundkörper 11 ein identischer oder artgleicher Vergütungsstahl oder AFP-Stahl verwendet werden.

Das erste Kolbenbauteil 11 und das zweite Kolbenbauteil 18 bilden einen umlaufenden äußeren Kühlkanal 19. Der Kühlkanal 19 verläuft einerseits in Höhe der Ringpartie 14 und andererseits in Höhe der Muldenwand 15b der Verbrennungsmulde 15.

Das zweite Kolbenbauteil 18 weist eine untere umlaufende Fügefläche 24a (vgl. Figur 2) auf, die mit einer umlaufenden, den Boden 15a der Verbrennungsmulde 15 umschließenden Fügefläche 23a (vgl. Figur 3) des ersten Kolbenbauteils 11 eine untere Laserschweißnaht 21 bildet. Die untere Laserschweißnaht 21 verläuft im Ausführungsbeispiel, ausgehend von der Muldenwand 15b, radial nach außen und unten in Richtung des Kolbenschafts 17 und mündet in den Kühlkanal 19.

Das zweite Kolbenbauteil 18 weist ferner eine obere umlaufende Fügefläche 24b (vgl. Figur 2) auf, die mit einer im Bereich des Feuerstegs 13 umlaufenden Fügefläche 23b (vgl. Figur 2) des ersten Kolbenbauteils 11 eine obere Laserschweißnaht 22 bildet. Die obere Laserschweißnaht 22 verläuft im Ausführungsbeispiel vom Kolbenboden 12 ausgehend in vertikaler Richtung parallel zur Kolbenmittelachse M und mündet in den Kühlkanal 19.

Die untere Laserschweißnaht 21 und die obere Laserschweißnaht 22 sind mittels eines Laserschweißverfahrens hergestellt und so angeordnet, dass sie einem Laser 25, 27 bzw. den von ihnen erzeugten Laserstrahlen 26, 28, zugänglich sind.

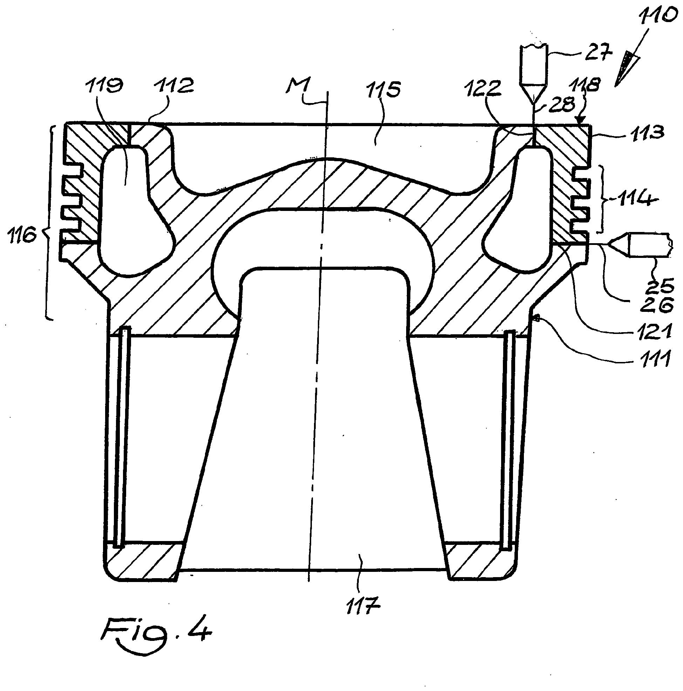

Figur 4 zeigt ein weiteres Ausführungsbeispiel eines Kolbens 110, nach dem Verbinden seiner Kolbenbauteile 111, 118. Der Kolben 110 weist in diesem Ausführungsbeispiel ein als Kolbengrundkörper ausgebildetes erstes Kolbenbauteil 111 auf, das ebenfalls aus einem Vergütungsstahl wie bspw. 42CrMo4 oder einem AFP-Stahl wie bspw. 38MnVS6 hergestellt sein kann. Das erste Kolbenbauteil 111 weist einen inneren Teil eines Kolbenbodens 112 mit einer Verbrennungsmulde 115 auf. Das erste Kolbenbauteil 111 bildet somit einen wesentlichen Teil des Kolbenkopfes 116 des Kolbens 110. Das Bauteil 111 bildet ferner in an sich bekannter Weise den Kolbenschaft 117 des Kolbens 110.

Der Kolben 110 weist ferner ein als Ringnutenelement ausgebildetes ringförmiges zweites Kolbenbauteil 118 auf. Das zweite Kolbenbauteil 118 umfasst den äußeren Teil des Kolbenbodens 112, einen umlaufenden Feuersteg 113 sowie eine umlaufende Ringpartie 114 mit Ringnuten zur Aufnahme von Kolbenringen (nicht dargestellt). Das zweite Kolbenbauteil 118 kann ebenfalls aus einem besonders widerstandsfähigen Werkstoff bestehen. Hierfür kann wie für den Kolbengrundkörper 111 ein identischer oder artgleicher Vergütungsstahl oder AFP-Stahl verwendet werden.

Das erste Kolbenbauteil 111 und das zweite Kolbenbauteil 118 bilden einen umlaufenden äußeren Kühlkanal 119. Der Kühlkanal 119 verläuft einerseits in Höhe der Ringpartie 114 und andererseits in Höhe der Verbrennungsmulde 115.

Das erste Kolbenbauteil 111 und das zweite Kolbenbauteil 118 des Kolbens 110 weisen analog zu den Kolbenbauteilen 11, 18 des Kolbens 10 Fügeflächen auf (nicht dargestellt), entlang der Laserschweißnähte gebildet werden können. Unterhalb der Ringpartie 114 des Kolbens 110 ist eine untere Laserschweißnaht 121 ausgebildet. Die untere Laserschweißnaht 121 verläuft im Ausführungsbeispiel, ausgehend von der Ringpartie 114, in radialer Richtung horizontal nach innen und mündet in den Kühlkanal 119.

Im Kolbenboden 112 des Kolbens 110 ist eine obere Laserschweißnaht 122 ausgebildet. Die obere Laserschweißnaht 122 verläuft im Ausführungsbeispiel vom Kolbenboden 112 ausgehend in vertikaler Richtung parallel zur Kolbenmittelachse M und mündet in den Kühlkanal 119.

Die untere Laserschweißnaht 121 und die obere Laserschweißnaht 122 sind mittels eines Laserschweißverfahrens hergestellt und so angeordnet, dass sie einem Laser 25, 27 bzw. den von ihnen erzeugten Laserstrahlen 26, 28, zugänglich sind.
Ein Ausführungsbeispiel des erfindungsgemäßen Verfahrens zur Herstellung eines Kolbens 10 bzw. 110 wird im Folgenden anhand der Figuren 3 und 5 näher beschrieben.

Zunächst werden die zu verbindenden ersten und zweiten Kolbenbauteile 11, 111; 18, 118 vorbearbeitet. Insbesondere werden die umlaufenden Fügeflächen 23a, 23b des ersten Kolbenbauteils 11 sowie die korrespondierenden umlaufenden Fügeflächen 24a, 24b des zweiten Kolbenbauteils 18 des Kolbens 10 bzw. die Fügeflächen des ersten Kolbenbauteils 111 und des zweiten Kolbenbauteils 118 des Kolbens 110 in an sich bekannter Weise für das Laserschweißen vorbereitet.

Nun werden die beiden Kolbenbauteile 11, 18; 111, 118 in an sich bekannter Weise entlang ihrer korrespondierenden Fügeflächen ausgerichtet. Zweckmäßigerweise wird zunächst die untere Laserschweißnaht 21, 121 und anschließend die obere Laserschweißnaht 22, 122 im Bereich des Kolbenbodens 12, 112 hergestellt. Dazu wird bspw. ein Festkörperlaser verwendet, der für die für ein Tiefschweißverfahren geeigneten Verfahrensparameter eingerichtet ist. Diese Verfahrensparameter hängen in an sich bekannter Weise insbesondere von der Art des Werkstoffs und der Tiefe der Laserschweißnaht ab. Daher sind die folgenden Angabe als Bereichsangaben zu verstehen, innerhalb derer die Verfahrensparameter für das Tiefschweißverfahren bevorzugt gewählt werden.

| | |
|---|---|
| Laserleistung | 2000 W bis 8000 W |
| Schweißgeschwindigkeit | 2 bis 6 m/min, bevorzugt 3 m/min |
| Strahldurchmesser | 200 µm bis 600 µm |

Der von dem Laser erzeugte Laserstrahl 26 bzw. 28 wird auf einen definierten Startpunkt SP (vgl. Figur 5) im Bereich korrespondierender Fügeflächen (vgl. Figuren 3 und 4) ausgerichtet. Ausgehend vom Startpunkt SP (vgl. Figur 5) wird der Laserstrahl entlang der Fügeflächen geführt. Zugleich wird seine Leistungsdichte bzw. Streckenenergie über eine definierte Strecke S1 unter Erzeugung einer Auframpschweißnaht 31 mit zunehmender Schweißnahttiefe kontinuierlich erhöht (Auframpen). Die Länge der definierten Strecke S1 kann bspw. 5 mm bis 15 mm betragen. Wenn die für das Tiefschweißen erforderliche Leistungsdichte von mindestens 1 × 10⁶ W/cm² erreicht ist, erfolgt ein umlaufendes, vollständiges Durchschweißen entlang der korrespondierenden Fügeflächen unter Erzeugung einer Tiefschweißnaht 32 mit im Wesentlichen konstanter Schweißnahttiefe von bspw. 2 mm bis 12 mm, die von der Art des Werkstoffs und der Abmessungen der Kolbenbauteile abhängig ist. Der Laserstrahl 26, 28 ist dabei parallel zu den korrespondierenden Fügeflächen ausgerichtet. Das Durchschweißen wird bis zum Erreichen eines definierten Endpunktes EP fortgesetzt, wobei die Auframpschweißnaht 31 zumindest teilweise überschweißt wird. Anschließend wird ab dem Endpunkt EP die Leistungsdichte des Laserstrahls über eine definierte Strecke S2 unter Erzeugung einer Abrampschweißnaht 33 mit abnehmender Schweißnahttiefe reduziert (Abrampen). Der Endpunkt EP liegt bevorzugt hinter der Auframpschweißnaht 31, so dass diese vollständig überschweißt wird und dass das Abrampen im Bereich der Tiefschweißnaht 32 beginnt. Die Länge der definierten Strecke S2 kann bspw. 5 mm bis 25 mm, bevorzugt bis zu 20 mm, betragen. Die Länge der Strecke S2 beträgt bevorzugt das Doppelte der Länge der Strecke S1.

Der folgende Verfahrensschritt des Überschweißens sollte möglichst unmittelbar nach Beendigung des Abrampens durchgeführt werden. Das Überschweißen kann auch schon vor Beendigung des Abrampens begonnen werden, so dass der dazu verwendete Laser dem für das Tiefschweißen eingerichteten Laser nachläuft.

Im Verfahrensschritt des Überschweißens wird zumindest ein Teil der definierten Strecken S1, S2 mittels Wärmeleitungsschweißen mit einer Leistungsdichte des Laserstrahls von 1 × 10⁴ W/cm² bis 1 × 10⁵ W/cm² unter Verwendung eines für ein Wärmeleitungsschweißverfahren eingerichteten Lasers unter Erzeugung mindestens einer Wärmeleitungsschweißnaht 34 (Figur 3) mit einer Schweißtiefe von bevorzugt mindestens 1 mm und höchstens 3 mm überschweißt. Dazu wird bspw. ein Festkörperlaser verwendet, der für die für ein Wärmeleitungsschweißverfahren geeigneten Verfahrensparameter eingerichtet ist. Diese Verfahrensparameter hängen in an sich bekannter Weise insbesondere von der Art des Werkstoffs und der Tiefe der Laserschweißnaht ab. Daher sind die folgenden Angabe als Bereichsangaben zu verstehen, innerhalb derer die Verfahrensparameter für das Wärmeleitungsschweißverfahren bevorzugt gewählt werden.

| | |
|---|---|
| Laserleistung | 500 W bis 4000 W |
| Schweißgeschwindigkeit | 0,5 bis 3 m/min, bevorzugt 1 m/min |
| Strahldurchmesser | 500 µm bis 3000 µm |

Im Ergebnis wird ein Kolben 10, 110 mit mindestens einer Laserschweißnaht 21,22; 121,122 erhalten, die sich aus einer Tiefschweißnaht 32 und einer Wärmeleitungsschweißnaht 34 zusammensetzt (vgl. Figur 4).

Der Kolben 10, 110 wird schließlich in an sich bekannter Weise fertig bearbeitet. Hierzu zählt auch, abhängig von den verwendeten Werkstoffen, eine dem Fachmann bekannte Wärmenachbehandlung.

## Patentansprüche

1. Verfahren zur Herstellung eines Kolbens (10, 110) für einen Verbrennungsmotor mit mindestens zwei Kolbenbauteilen (11, 18; 111, 118) wobei mindestens zwei Kolbenbauteile (11, 18;111, 118) entlang ihrer korrespondierenden Fügeflächen (23a, 24a, 23b, 24b) über mindestens eine radial oder axial umlaufende Laserschweißnaht (21, 22; 121, 122) miteinander verbunden werden, mit den folgenden Verfahrensschritten:
a) Ausrichten der mindestens zwei Kolbenbauteile (11, 18; 111, 118) entlang ihrer korrespondierenden Fügeflächen (23a, 24a, 23b, 24b),
b) Aktivieren eines für ein Tiefschweißverfahren eingerichteten Lasers (25, 27) und Ausrichten des vom Laser (25, 27) erzeugten Laserstrahls (26, 28) an einem definierten Startpunkt (SP) im Bereich der korrespondierenden Fügeflächen (23a, 24a, 23b, 24b),
**gekennzeichnet durch** die Verfahrensschritte:
c) Steigern der Leistungsdichte (Auframpen) des Laserstrahls (26, 28) ausgehend vom definierten Startpunkt (SP) über eine definierte Strecke (S1) entlang der korrespondierenden Fügeflächen (23a, 24a, 23b, 24b) unter Erzeugung einer Auframpschweißnaht (31) mit zunehmender Schweißnahttiefe,
d) umlaufendes, vollständiges Durchschweißen entlang der korrespondierenden Fügeflächen (23a, 24a, 23b, 24b) mittels Tiefschweißen unter Erzeugung einer Tiefschweißnaht (32) mit im Wesentlichen konstanter Schweißnahttiefe bis zum definierten Endpunkt (EP),
e) Reduzieren der Leistungsdichte (Abrampen) des Laserstrahls (26, 28) über eine definierte Strecke (S2) unter Erzeugung einer Abrampschweißnaht (33) mit abnehmender Schweißnahttiefe,
f) Überschweißen zumindest eines Teils der definierten Strecken (S1, S2) mittels Wärmeleitungsschweißen unter Verwendung eines für ein Wärmeleitungsschweißverfahren eingerichteten Lasers unter Erzeugung mindestens einer Wärmeleitungsschweißnaht (34).

2. Verfahren nach Anspruch 1, **dadurch gekennzeichnet, dass** in Schritt c) die Länge der definierten Strecke (S1) auf 5 mm bis 15 mm eingestellt wird.

3. Verfahren nach Anspruch 1, **dadurch gekennzeichnet, dass** in Schritt e) die Länge der definierten Strecke (S2) auf 5 mm bis 25 mm eingestellt wird.

4. Verfahren nach Anspruch 1, **dadurch gekennzeichnet, dass** in Schritt d) die Schweißnahttiefe der Tiefschweißnaht (32) auf 2 mm bis 12 mm eingestellt wird.

5. Verfahren nach Anspruch 1, **dadurch gekennzeichnet dass** der zeitliche Abstand zwischen Schritt e) und Schritt f) maximal 10 Sekunden beträgt.

6. Verfahren nach Anspruch 1, **dadurch gekennzeichnet, dass** für Schritt e) und für Schritt f) zwei separate Laser verwendet werden und dass Schritt f) vor der Beendigung von Schritt e) unter Verwendung eines separaten Lasers begonnen wird.

7. Verfahren nach Anspruch 1, **dadurch gekennzeichnet, dass** in Schritt f) die definierte Strecke (S2) vollständig überschweißt wird.

8. Verfahren nach Anspruch 1, **dadurch gekennzeichnet, dass** in Schritt f) die Laserschweißnaht (32) zumindest teilweise überschweißt wird.

9. Verfahren nach Anspruch 1, **dadurch gekennzeichnet, dass** in Schritt f) die Schweißnahttiefe der Wärmeleitungsschweißnaht (33) auf mindestens 1 mm und höchstens 3 mm eingestellt wird.

10. Verfahren nach Anspruch 1, **dadurch gekennzeichnet, dass** ein erstes Kolbenbauteil (11, 110) in Form eines Kolbengrundkörpers und ein zweites Kolbenbauteil (18, 118) in Form eines ringförmigen Bauteils verwendet wird.

11. Verfahren nach Anspruch 11, **dadurch gekennzeichnet, dass** ein ringförmiges Bauteil in Form eines Muldenrandelements (18) verwendet wird.

12. Verfahren nach Anspruch 11, **dadurch gekennzeichnet, dass** ein ringförmiges Bauteil in Form eines Ringnutenelements (118) verwendet wird.

## Claims

1. Method for producing a piston (10, 110) for an internal combustion engine having at least two piston components (11, 18; 111, 118) wherein at least two piston components (11, 18; 111, 118) are connected with one another along their corresponding joining surfaces (23a, 24a, 23b, 24b) via at least one radially or axially peripheral laser weld seam (21, 22; 121, 122), having the following method steps:
a) aligning the at least two piston components (11, 18; 111, 118) along their corresponding joining surfaces (23a, 24a, 23b, 24b),
b) activating a laser (25, 27) configured for a deep welding process and aligning the laser beam (26, 28) generated by the laser (25, 27) on a defined starting point (SP) in the region of the corresponding joining surfaces (23a, 24a, 23b, 24b),
**characterised by** the method steps:
c) increasing the performance density (ramping up) of the laser beam (26, 28) starting from the defined starting point (SP) over a defined stretch (S1) along the corresponding joining surfaces (23a, 24a, 23b, 24b) with the generation of a ramp up weld seam (31) with increasing weld seam depth,
d) peripheral, complete through welding along the corresponding joining surfaces (23a, 24a, 23b, 24b) by means of deep welding with the generation of a deep weld seam (32) with substantially constant weld seam depth up to the defined endpoint (EP),
e) reduction of the performance density (ramping down) of the laser beam (26, 28) over a defined stretch (S2) with the generation of a ramp down weld seam (33) with decreasing weld seam depth.
f) overwelding of at least one part of the defined stretches (S1, S2) by means of heat conduction welding with the use of a laser configured for a heat conduction welding process with the generation of at least one heat conduction weld seam (34).

2. Method according to claim 1, **characterised in that** in step c) the length of the defined stretch (S1) is set to 5 mm to 15 mm.

3. Method according to claim 1, **characterised in that** in step e) the length of the defined stretch (S2) is set to 5 mm to 25 mm.

4. Method according to claim 1, **characterised in that** in step d) the weld seam depth of the deep weld seam (32) is set to 2 mm to 12 mm.

5. Method according to claim 1, **characterised in that** the chronological spacing between step e) and step f) is maximum 10 seconds.

6. Method according to claim 1, **characterised in that** for step e) and for step f) two separate lasers are used and that step f) is begun prior to the ending of step e) using a separate laser.

7. Method according to claim 1, **characterised in that** in step f) the defined stretch (S2) is completely welded over.

8. Method according to claim 1, **characterised in that** in step f) the laser weld seam (32) is at least partially welded over.

9. Method according to claim 1, **characterised in that** in step f) the weld seam depth of the heat conduction weld seam (33) is set to at least 1 mm and at most 3 mm.

10. Method according to claim 1, **characterised in that** a first piston component (11, 110) in the form of a piston base body and a second piston component (18, 118) in the form of an annular component is used.

11. Method according to claim 11, **characterised in that** an annular component in the form of a trough rim element (18) is used.

12. Method according to claim 11, **characterised in that** an annular component in the form of an annular groove element (118) is used.

## Revendications

1. Procédé de fabrication d'un piston (10, 110) pour un moteur à combustion interne avec au moins deux pièces de piston (11, 18; 111, 118), dans lequel au moins deux pièces de piston (11, 18 ; 111, 118) sont assemblées le long de leurs surfaces d'assemblage correspondantes (23a, 24a, 23b, 24b) par l'intermédiaire d'au moins un cordon de soudage au laser (21, 22 ; 121, 122) périphérique de façon radiale ou de façon axiale, avec les étapes de procédé suivantes :
a) alignement des au moins deux pièces de piston (11, 18 ; 111, 118) le long de leurs surfaces d'assemblage correspondantes (23a, 24a, 23b, 24b),
b) activation d'un laser (25, 27) réglé pour un procédé de soudage profond et alignement du faisceau laser (26, 28) produit par le laser (25, 27) au niveau d'un point de départ défini (SP) dans la zone des surfaces d'assemblage correspondantes (23a, 24a, 23b, 24b),
**caractérisé par** les étapes de procédé :
c) augmentation de la densité de puissance (augmentation progressive) du faisceau laser (26, 28) à partir du point de départ défini (SP) sur une trajectoire définie (S1) le long des surfaces d'assemblage correspondantes (23a, 24a, 23b, 24b) avec production d'un cordon de soudage progressif (31) ayant une profondeur de cordon de soudage croissante,
d) soudage périphérique complet le long des surfaces d'assemblage correspondantes (23a, 24a, 23b, 24b) au moyen du soudage profond avec production d'un cordon de soudage profonde (32) avec une profondeur de cordon de soudage globalement constante jusqu'au point d'arrivée défini (EP),
e) réduction de la densité de puissance (réduction progressive) du faisceau laser (26, 28) sur une trajectoire définie (S2) avec production d'un cordon de soudage progressif (33) ayant une profondeur de cordon de soudage décroissante,
f) soudage supplémentaire d'au moins une partie des trajectoires définies (S1, S2) au moyen d'un soudage par conduction thermique en utilisant un laser réglé pour un procédé de soudage par conduction thermique avec production d'au moins un cordon de soudage par conduction thermique (34).

2. Procédé selon la revendication 1, **caractérisé en ce que**, à l'étape c), la longueur de la trajectoire définie (S1) est réglée sur 5 mm à 15 mm.

3. Procédé selon la revendication 1, **caractérisé en ce que**, à l'étape e), la longueur de la trajectoire définie (S2) est réglée sur 5 mm à 25 mm.

4. Procédé selon la revendication 1, **caractérisé en ce que**, à l'étape d), la profondeur de cordon de soudage (32) est réglée sur 2 mm à 12 mm.

5. Procédé selon la revendication 1, **caractérisé en ce que** l'intervalle de temps entre l'étape e) et l'étape f) est égal au maximum à 10 secondes.

6. Procédé selon la revendication 1, **caractérisé en ce que** deux lasers séparés sont utilisés pour l'étape e) et pour l'étape f) et **en ce que** l'étape f) est commencée avant la fin de l'étape e) en utilisant un laser séparé.

7. Procédé selon la revendication 1, **caractérisé en ce que**, à l'étape f), la trajectoire définie (S2) est complètement recouverte par un soudage supplémentaire.

8. Procédé selon la revendication 1, **caractérisé en ce que**, à l'étape f), le cordon de soudage au laser (32) est au moins partiellement recouvert par un soudage supplémentaire.

9. Procédé selon la revendication 1, **caractérisé en ce que**, à l'étape f), la profondeur du cordon de soudage par conduction thermique (33) est réglée sur au minimum 1 mm et au maximum 3 mm.

10. Procédé selon la revendication 1, **caractérisé en ce qu'**on utilise une première pièce de piston (11, 110) sous la forme d'un corps de base de piston et une deuxième pièce de piston (18, 118) sous la forme d'une pièce annulaire.

11. Procédé selon la revendication 11, **caractérisé en ce qu'**une pièce annulaire est utilisée sous la forme d'un élément de bord de cavité (18).

12. Procédé selon la revendication 11, **caractérisé en ce qu'**une pièce annulaire sous est utilisée la forme d'un élément de rainure annulaire (118).
